# EUROPEAN PATENT APPLICATION

(11) **EP 4 398 341 A1**
(43) Date of publication of application: **10.07.2024**
(21) Application number: 23797627.9
(22) Date of filing: 21.08.2023
(51) Int. Cl.: H01M 4/36, H01M 4/48, H01M 4/58, H01M 4/13

(54) **COATED POSITIVE ELECTRODE MATERIAL AND PREPARATION METHOD THEREFOR, SECONDARY BATTERY, POSITIVE ELECTRODE, AND ELECTRIC DEVICE**

(30) Priority: 24.11.2022 CN 202211480985
(71) Applicant: Tianjin B&M Science And Technology Co., Ltd., Tianjin 300384 (CN)
(72) Inventor: CHEN, Dexian, Tianjin 300384 (CN); LI, Qi, Tianjin 300384 (CN); LI, Yihao, Tianjin 300384 (CN); WANG, Huimin, Tianjin 300384 (CN); LIU, Meijing, Tianjin 300384 (CN); LV, Fei, Tianjin 300384 (CN)
(74) Representative: Meroni, Francesca
(86) International application number: PCT/CN2023/114064
(87) International publication number: WO 2024/109200

(57) **Abstract**

The present disclosure relates to the field of battery electrode material technology, and particularly to a coated cathode material, a preparation method thereof, a battery cathode, a secondary battery, and an electric device; the coated cathode material includes a cathode material matrix, a coprecipitation layer located on a surface of the cathode material matrix, and a passivation layer located on a surface of the coprecipitation layer, the matrix includes a doped layer contiguous with the coprecipitation layer, the doped layer has a thickness less than or equal to 50nm, and composition of the coprecipitation layer includes transition metal phosphate and transition metal oxide. The preparation method according to the present disclosure is rapid and efficient, and the prepared coated cathode material can be used for preparing the secondary battery to improve cycle stability and a rate performance of the battery.

## Description

### Cross-reference to Related Applications

The present disclosure claims priority to Chinese Patent Application No. 202211480985.3, entitled "Coated Cathode Material and Preparation Method Thereof, Secondary Battery, Cathode, and Electric Device", filed with China National Intellectual Property Administration on November 24, 2022, the entire content of which is incorporated herein by reference.

### Technical Field

The present disclosure relates to the field of battery electrode material technology, and particularly to a coated cathode material and a preparation method thereof, a secondary battery, a cathode, and an electric device.

### Background Art

A lithium ion battery has advantages of a long service life, safe use, high temperature resistance, a large capacity, no memory effect, a small volume, a light weight, or the like, and is widely applied to multiple fields. In the field of electric automobiles with the widest application, a cycle life performance of the battery is an important index for evaluating performances of the battery and materials, and a development of a secondary battery with a long cycle performance is also a current development trend.

In an existing cathode material system, a ternary material is widely applied by virtue of advantages of a high specific energy density and a good cycle performance. With charge and discharge of the battery, especially in an extreme use environment, a cycle performance of a cathode material in the battery may be greatly attenuated, and main factors are as follows: (1) in the extreme use environment, severe shrinkage of unit cells after lithium extraction causes continuous growth of cracks on crystal boundary, resulting in collapse and decay of a crystal structure; (2) an electrode/electrolyte solution interface reaction causes a dissolving-out phenomenon of surface metal, which causes reconstruction of surface lattices to form an inactive rock salt phase and an spinel phase, thus adversely affecting the structure and the cycle performance of the material.

In order to improve stability of an electrode structure of the battery, inhibit generation of the cracks on the crystal boundary, and reduce the electrode/electrolyte solution interface reaction, currently, solid phase method doping and coating are generally performed on the material by means of a metal oxide doping method using inert nano inorganic oxide (such as aluminum oxide, magnesium oxide, titanium oxide, zinc oxide, or the like). However, the doping and coating methods of existing large-scale technologies suffer from the following disadvantages: (1) conventional pure oxide doping can inhibit the shrinkage of the unit cells to a certain extent, but cannot inhibit the continuous growth of the crack on the crystal boundary; (2) a nano oxide coating layer of a conventional solid phase method process is an insulator, such that degradation of the structure and attenuation of the performance of an interface are caused continuously, thereby reducing the cycle performance and the rate performance of the material.

### Summary

Based on this, an object of the present disclosure is to provide a coated cathode material, which can be used for preparing a secondary battery cathode, a secondary battery, and an electric device, and can effectively improve a cycle performance and a rate performance of the prepared battery.

A first aspect of the present disclosure provides a coated cathode material, including a cathode material matrix, a coprecipitation layer located on a surface of the cathode material matrix, and a passivation layer located on a surface of the coprecipitation layer;
wherein the matrix includes a doped layer contiguous with the coprecipitation layer, the doped layer having a thickness less than or equal to 50nm;
composition of the coprecipitation layer includes transition metal phosphate and transition metal oxide.

In some embodiments of the present disclosure, in the coated cathode material, composition of the doped layer includes the transition metal phosphate and the transition metal oxide.

In some embodiments of the present disclosure, in the coated cathode material, the doped layer has a micro-support structure.

In some embodiments of the present disclosure, in the coated cathode material, the passivation layer has a porous structure.

In some embodiments of the present disclosure, in the coated cathode material, the transition metal phosphate is M1ₐN1_{b}(PO₄)₃, M1 and N1 are different and independently selected from Ni, Co, Mn, Zr, Bi, Zn, La, Al, Ti, Ge, W, or Sr, 0≤a≤10, 0≤b≤10, and a and b are not both 0;
the transition metal oxide is M2_{c}N2_{d}O₂, M2 and N2 are different and independently selected from Ni, Co, Mn, Zr, Bi, Zn, La, Al, Ti, Ge, W or Sr, 0≤c<10, 0≤d<10, and c and d are not both 0.

In some embodiments of the present disclosure, the coated cathode material has one or more of the following features:
(1) M1 and N1 are different and independently selected from Al, Ge, W, Sr, Zr, or Ti;
(2) M2 and N2 are different and independently selected from Al, Ge, W, Sr, Zr, or Ti;
(3) 0≤a<3, 0≤b<4, 0≤c<3, and 0≤d<4.

In some embodiments of the present disclosure, a material of the passivation layer is a compound CₘNₙ, 0<m<5, 0<n<5, and m and n are integers.

In some embodiments of the present disclosure, the coated cathode material has one or more of the following features:
(1) in an XRD pattern of the coated cathode material, a diffraction peak intensity ratio I₀₀₃/I₁₀₄ between a (003) crystal plane and a (104) crystal plane satisfies 1.40<I₀₀₃/I₁₀₄≤1.60;
(2) a lattice parameter c of the coated cathode material satisfies the following relationship: 14Å<c<15Å.

A second aspect of the present disclosure provides a preparation method of a coated cathode material, including the following steps:
S100: mixing a precursor, phosphate and water, and adjusting pH to 4-7, so as to obtain a base solution;
S200: adding a transition metal salt solution into the base solution, wherein a metal cation in the transition metal salt solution and at least two anions in the base solution are subjected to a precipitation reaction to form a coprecipitation coated on the precursor, so as to obtain a first coated material;
S300: mixing the first coated material and a lithium salt, and performing a first calcination to obtain a first calcined material; and
S400: mixing the first calcined material, a carbon source and a nitrogen source, and performing a second calcination to obtain the coated cathode material;
wherein the coated cathode material includes a cathode material matrix, a coprecipitation layer located on a surface of the cathode material matrix, and a passivation layer located on a surface of the coprecipitation layer;
the matrix includes a doped layer contiguous with the coprecipitation layer, the doped layer having a thickness less than or equal to 50nm;
composition of the coprecipitation layer includes transition metal phosphate and transition metal oxide.

In some embodiments of the present disclosure, in the preparation method, in the step S300:
part of constituent elements of the coprecipitation of the first coated material permeate from a surface to a core to obtain the first calcined material.

In some embodiments of the present disclosure, the preparation method has one or more of the following features:
(1) a particle size of the precursor is 4µm to 15µm;
(2) conditions of the first calcination include: calcination at 500°C to 1,000°C in an oxygen or air atmosphere;
(3) conditions of the second calcination include: calcination at 200°C to 800°C in a protective gas atmosphere;
(4) a speed of adding the metal salt solution into the base solution is 0.4mL/min to 0.6mL/min.

In some embodiments of the present disclosure, in the preparation method, the transition metal salt solution includes a first metal salt and a second metal salt; the first metal salt includes metal M1 and N1; the second metal salt includes metal M2 and N2; M1, M2, N1 and N2 are as defined in the first aspect of the present disclosure;
the step S200 includes: dissolving the first metal salt in a solvent to obtain a first metal salt solution; and adding the first metal salt solution into the base solution, the metal cations in the first metal salt solution reacting with phosphate radicals in the base solution to obtain a first precipitate;
dissolving the second metal salt in a solvent to obtain a second metal salt solution; adjusting pH to 8-12 with an alkali solution, and adding the second metal salt solution into the base solution, the metal cations in the second metal salt solution reacting with hydroxy radicals in the base solution to obtain a second precipitate; and
forming the coprecipitation by the first precipitate and the second precipitate, and coating the precursor with the coprecipitation in situ to obtain the first coated material.

In some embodiments of the present disclosure, the preparation method has one or more of the following features:
(1) a mass ratio of the precursor, the first metal salt and the second metal salt is 1:(0.001-0.05):(0.001-0.05);
(2) a concentration of the metal cations in the first metal salt solution is 0.001 mol/L to 0.1 mol/L, a concentration of the metal cations in the second metal salt solution is 0.001mol/L to 0.1mol/L, and a total concentration of the metal cations in the first metal salt solution and the second metal salt solution is 0.001mol/L to 0.02mol/L;
(3) a concentration of the phosphate radicals in the base solution is 0.005mol/L to 0.5mol/L;
(4) a mass ratio of the precursor and the alkali solution is 1:(1-50), and a concentration of the alkali solution is 0.1mol/L to 10mol/L.

In some embodiments of the present disclosure, in the preparation method, in the step S400:
the first calcined material, the carbon source and the nitrogen source are mixed to be subjected to the second calcination, and the porous passivation layer is formed on the first coated material to obtain the coated cathode material.

In some embodiments of the present disclosure, in the preparation method, a mass ratio of the first coated material, the carbon source and the nitrogen source is 1:(0.001-0.01):(0.0013-0.02).

In some embodiments of the present disclosure, the preparation method has one or more of the following features:
(1) the phosphate is one or more of ammonium dihydrogen phosphate, diammonium hydrogen phosphate, sodium dihydrogen phosphate and potassium dihydrogen phosphate;
(2) the lithium salt is one or more of lithium carbonate, lithium hydroxide and lithium acetate;
(3) each of the carbon source and the nitrogen source is one or more of urea, uric acid and hydrazine hydrate.

A third aspect of the present disclosure provides a battery cathode, wherein an active material of the battery cathode is the coated cathode material according to the first aspect of the present disclosure or the coated cathode material prepared by the preparation method according to the second aspect of the present disclosure.

A fourth aspect of the present disclosure provides a secondary battery, including the battery cathode according to the third aspect of the present disclosure.

A fifth aspect of the present disclosure provides an electric device, including the secondary battery according to the fourth aspect of the present disclosure.

The coated cathode material according to the present disclosure includes the cathode material matrix, the coprecipitation layer located on the surface of the cathode material matrix and the passivation layer located on the surface of the coprecipitation layer, wherein the matrix includes the doped layer contiguous with the coprecipitation layer. The doped layer is a derivative structure formed by the permeation of the composition of the coprecipitation layer to the surface of the cathode material matrix, and it has a micro-region of olivine structure, can form a framework support, inhibits generation and growth of cracks of a crystal boundary caused by shrinkage of a unit cell after lithium extraction, and meanwhile can also inhibit a lattice distortion generated by migration of metal ions and oxygen ions in a cycle process, and inhibit formation of surface impure phases, such as a rock salt phase and a spinel phase. Conductivity of lithium ions of the passivation layer of the coated cathode material is far higher than that generated when coating is performed by conventional inorganic oxide close to an insulation state, thus improving the cycle performance and the rate performance of the material; when the material is used as a cathode material of a lithium ion battery, on the one hand, an electrode/electrolyte solution interface can be effectively stabilized, corrosion and structural damage of the material interface are reduced, DCR growth is reduced, and the cycle performance and the rate performance of the material are improved; on the other hand, the passivation layer is of a porous structure, having a good compatibility with an electrolyte solution, so that wettability of the electrode is increased, and integrity can be kept in an electrode rolling process.

In the preparation method according to the present disclosure, a coating structure is formed first, the lithium salt is then introduced for calcination, the coprecipitation layer is first formed on the precursor by a proper method, the lithium salt is then added for calcination (the primary calcination), a lithium element is introduced into the core to react with the precursor to form the cathode material matrix, wherein all or part of the constituent elements of the coprecipitation layer permeate into the core in the calcination process, so as to realize shallow surface layer doping and form the micro-region of olivine structure, and then, the first calcined material, the carbon source, and the nitrogen source are calcined (the secondary calcination) to form the porous passivation layer.

### Brief Description of Drawings

To describe the technical solutions in the specific embodiments of the present disclosure or the prior art more clearly, the following briefly describes the accompanying drawings required for describing the specific embodiments or the prior art. Apparently, the accompanying drawings in the following description show some embodiments of the present disclosure, and those skilled in the art may further derive other drawings from these accompanying drawings without creative efforts. It should also be noted that the drawings are drawn in a simplified form only to facilitate and clearly assist in the description of the disclosure. Various sizes of each component shown in the drawings are arbitrarily illustrated, and may be precise or may not be drawn to scale. For example, the sizes of the components are exaggerated appropriately in some places in the drawings for clarity of illustration. Various components of the drawings are not drawn to scale unless specifically indicated. Not every size of every component is limited in the present disclosure.

Like reference numerals refer to like parts in the following description.
FIG. 1 is a schematic structural diagram (A in FIG. 1) and a schematic partial diagram (B in FIG. 1) of a coated cathode material prepared in an example of the present disclosure;
FIG. 2 is a scanning electron microscope (SEM) image of the coated cathode material prepared in example 1 of the present disclosure;
FIG. 3 is an X-ray diffraction (XRD) pattern of the coated cathode materials prepared in example 1, example 2, comparative example 1, and comparative example 2 of the present disclosure; and
FIG. 4 is a comparison diagram of a cycle test of batteries prepared from the coated cathode materials prepared in example 1, example 2, comparative example 1, and comparative example 2 of the present disclosure.

Reference numerals: 100-cathode material matrix; 110-cathode material matrix core; 120-doped layer; 200-outer coating layer; 210-coprecipitation layer; 220-passivation layer.

### Detailed Description

The present disclosure is further illustrated below in conjunction with embodiments, examples, and drawings. It should be understood that these examples are for illustrative purposes only and are not intended to limit the scope of the present disclosure. Furthermore, it should be understood that various changes or modifications can be made to the disclosure by those skilled in the art after reading the teaching of the disclosure, and such equivalents also fall within the protection scope of the appended claims.

Unless defined otherwise, all technical and scientific terms used herein have the same meanings as are commonly understood by those skilled in the art. The terms used herein in the specification of the disclosure are for the purpose of describing specific examples only but not intended to limit the present disclosure.

Unless otherwise indicated or contradicted, terms or phrases used herein have the following meanings:
in the present disclosure, "micro-support structure" refers to a support structure formed by shallow surface doping of transition metal phosphate in the present disclosure. For example, the transition metal phosphate in the coating layer on the surface of the cathode material matrix may permeate into the core under the intervention of a certain external force (for example, under calcination).

A selection range of the terms "and/or" and "or/and" used herein encompasses any of two or more associated listed items, as well as any and all combinations of the associated listed items, including combinations of any two associated listed items, any more associated listed items, or all associated listed items. It should be noted that when at least three items are connected by at least two conjunctive combinations selected from "and/or" and "or/and", it should be understood that in the present disclosure, the technical solution unquestionably includes a technical solution in which all the items are connected by "logical and", and also unquestionably includes a technical solution in which all the items are connected by "logical or". For example, "A and/or B" includes A, B, and A+B. For example, the technical solution "A, and/or, B, and/or, C, and/or, D" includes any one of A, B, C, and D (i.e., the technical solutions in which all the items are connected by "logical or"), and any and all combinations of A, B, C. and D, i.e., combinations of any two or any three of A, B, C. and D, and a combination of four of A, B, C. and D (i.e., the technical solution in which all the items are connected by "logical and").

Herein, the terms "preferably", "better", "preferred", or the like, are used only to describe embodiments or examples with better effects, and should not be construed as limiting the protection scope of the disclosure.

In the present disclosure, the terms "further", "still further", "particularly", or the like, are used for the descriptive purposes to indicate differences in content, but should not be construed as limiting the protection scope of the present disclosure.

In the present disclosure, the terms "first", "second", "third", "fourth", "fifth", or the like, in the terms "first aspect", "second aspect", "third aspect", "fourth aspect", "fifth aspect", or the like, are used for descriptive purposes only and are not to be construed as indicating or implying a relative importance or quantity, nor as implicitly indicating the importance or quantity of the indicated technical features. Moreover, the terms "first", "second", "third", "fourth", "fifth", or the like, are used merely as non-exhaustive lists and should not be construed as closed limiting of the quantity.

In the present disclosure, the technical features described in an open type include a closed technical solution including the listed features, and also include an open technical solution including the listed features.

In the present disclosure, reference is made to a numerical interval (i.e., a numerical range), and, unless otherwise stated, optional value distribution is considered to be continuous within the numerical interval, and includes both numerical endpoints of the numerical range (i.e., minimum and maximum values), as well as each numerical value between the two numerical endpoints. Unless otherwise indicated, when a numerical interval refers only to integers within the numerical interval, both endpoint integers of the numerical range and each integer between the two endpoints are inclusive. Furthermore, when multiple ranges are provided to describe features or characteristics, these ranges may be combined. In other words, unless otherwise indicated, the ranges disclosed herein are to be understood to include any and all sub-ranges subsumed therein.

Temperature parameters in the present disclosure are allowed to be obtained under constant temperature treatment or to vary within a certain temperature interval, unless particularly defined. It should be appreciated that the described constant temperature treatment allows the temperature to fluctuate within a control precision range of an instrument. For example, the temperature is allowed to fluctuate in ranges of ±5°C, ±4°C, ±3°C, ±2°C and ±1°C.

In the present disclosure, the weight may be in units of mass known in the chemical field, such as µg, mg, g, kg, or the like.

In the present disclosure, the size, particle size, and diameter generally refer to average values, unless particularly limited.

In a first aspect of the present disclosure, a coated cathode material is provided, in which a coating structure can effectively reduce a dissolving-out phenomenon of transition metal, reduce an increase of cycle DCR, and improve high-temperature storage and cycle performance of the material.

In some embodiments of the present disclosure, the coated cathode material includes a cathode material matrix, a coprecipitation layer located on a surface of the cathode material matrix, and a passivation layer located on a surface of the coprecipitation layer;
herein, the matrix includes a doped layer contiguous with the coprecipitation layer; in some embodiments, the doped layer has a thickness less than or equal to 50nm;
composition of the coprecipitation layer includes transition metal phosphate and transition metal oxide.

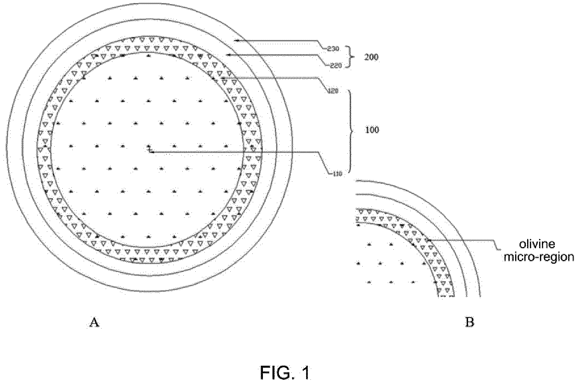

In some embodiments, a structure of the coated cathode material is shown in A in FIG. 1. Herein, A in FIG. 1 includes the cathode material matrix 100 and an outer coating layer 200, the cathode material matrix 100 includes a matrix core 110 and a doped layer 120, and the outer coating layer 200 includes the coprecipitation layer 210 and the passivation layer 220; the cathode material matrix 100 and the outer coating layer 200 jointly form the coated cathode material.

In some embodiments, distribution of a micro-support structure in the doped layer of the coated cathode material is shown in B in FIG. 1. By way of example, B in FIG. 1 includes a micro-region of an olivine structure.

In some embodiments, the doped layer is a derivative structure formed by permeation of constituent elements of the coprecipitation layer to a near-surface of the cathode material matrix. Further, composition of the doped layer includes transition metal phosphate and transition metal oxide. The doped layer of the coated cathode material according to the present disclosure can effectively inhibit crystal cracks caused by unit cell shrinkage in a cycle process and prevent a lattice distortion caused by the formation of impure phases, such as a rock salt phase and a spinel phase, in a surface sub-layer.

In some embodiments, the doped layer has a micro-support structure, and further, the micro-support structure includes an olivine structure, and for features of the olivine structure, reference may be made to lithium iron phosphate, where structural motifs are LiOs octahedrons, MOe octahedrons, and POa tetrahedrons. The lithium iron phosphate has a stable structure, and can improve a cycle performance of an electrode when used as a cathode material, but the lithium iron phosphate has lower electronic conductivity and ionic conductivity, such that a battery has a poorer rate performance. The doped layer of the coated electrode material according to the present disclosure has a micro-support structure, such that a stabilizing effect can be achieved, and the conductivity of the material is not influenced.

Further, a (total) thickness of the doped layer is preferably 5nm to 50nm, wherein if the thickness of the doped layer is less than 5nm, it may not effectively functions as isolating an electrode and electrolyte solution interface reaction, and if the thickness of the doped layer exceeds 50nm, the material may generate an unstable phenomenon of phase interface, and a resulting capacity is not favorable for achieving an optimal electrochemical performance of the material. For example, the thickness of the doped layer may be 5nm, 10nm, 15nm, 20nm, 25nm, 30nm, 35nm, 40nm, 45nm, 50nm, or the like, and other point values within the above numerical range may be selected, which is not repeated herein.

In some embodiments, the transition metal phosphate is M1ₐN1_{b}(PO₄)₃, where M1 and N1 are different and independently selected from Ni, Co, Mn, Zr, Bi, Zn, La, Al, Ti, Ge, W, or Sr, where 0≤a<10, 0≤b<10, and a and b are not both 0.

In some embodiments, M1 and N1 are different and independently selected from Al, Ge, W, Sr, Zr, or Ti.

In some embodiments, the transition metal oxide is M2_{c}N2_{d}O₂, where M2 and N2 are different and independently selected from Ni, Co, Mn, Zr, Bi, Zn, La, Al, Ti, Ge, W or Sr, 0≤c<10, 0≤d<10, and c and d are not both 0.

In some embodiments, M2 and N2 are different and independently selected from Al, Ge, W, Sr, Zr, or Ti.

In some embodiments, 0≤a<3, 0≤b<4, 0≤c<3, and 0≤d<4.

In some embodiments, the passivation layer has a porous structure. The passivation layer of the coated cathode material according to the present disclosure can inhibit electrode/electrolyte solution interface contact, reduce lattice defects caused by the dissolving-out phenomenon of the transition metal, reduce the increase of the cycle DCR, and improve the high-temperature storage and cycle performance of the material.

In some embodiments, a material of the passivation layer is a compound CₘNₙ, where 0<m<5, 0<n<5, and m and n are integers. Further, 1<m<4, and 2<n<5.

Preferably, M1 is Al, N1 is selected from Ge, Ga or Ce, M1 is the same as M2, and N1 is the same as N2; x is 0.6, y is 0.1, a is 1, b is 1, c is 0.3, d is 0.3, m is 3, and n is 4, which is beneficial to enhancing a bonding force among layers, providing a structural support with high stability, inhibiting the surface structural distortion, and improving stability of the battery.

In some embodiments, in an XRD pattern of the coated cathode material, a diffraction peak intensity ratio I₀₀₃/I₁₀₄ between a (003) crystal plane and a (104) crystal plane satisfies 1.40<I₀₀₃/I₁₀₄≤1.60; specifically, I₀₀₃/I₁₀₄ may be 1.4, 1.42, 1.45, 1.48, 1.5, 1.52, 1.54, 1.55, 1.57, 1.59, 1.6, etc.

In some embodiments, a lattice parameter c of the coated cathode material satisfies the following relationship: 14Å<c<15Å; specifically, c may be 14.1Å, 14.2Å, 14.3Å, 14.5Å, 14.6Å, 14.7Å, 14.8Å, 14.9Å, etc.

In a second aspect of the present disclosure, a preparation method of a coated cathode material is provided. The preparation method according to the present disclosure is different from a traditional technology, wherein a coating structure is formed first, and a lithium salt is then introduced for calcination; specifically, a coprecipitation layer is formed on a precursor by a proper method first, the lithium salt is then added for calcination (primary calcination), wherein lithium element permeates into a core through a surface layer in the calcination process, reacts with the precursor to form lithium nickel cobalt manganate oxide, and meanwhile reacts with part or all components of the coprecipitation layer to generate transition metal phosphate and transition metal oxide, and part of consistent elements of the coprecipitation permeate into the core from the surface, so as to form a micro-support structure in a shallow surface of a cathode material matrix; then, a carbon source and a nitrogen source are added to mix for calcination (secondary calcination), so as to form a porous passivation layer on a first calcined material.

The preparation method according to the second aspect of the present disclosure can be used for preparing the coated cathode material according to the first aspect of the present disclosure, and effectively improves stability and rate performance of the material.

In some embodiments of the present disclosure, the preparation method of a coated cathode material includes the following steps:
S100: mixing a precursor, phosphate, and water, and adjusting pH to 4-7 (such as 4, 4.5, 5, 5.5, 6, 6.5, 7, or the like), so as to obtain a base solution;
S200: adding a transition metal salt solution into the base solution, wherein a metal cation in the transition metal salt solution and at least two anions in the base solution are subjected to a precipitation reaction to form a coprecipitation, which is coated on the precursor, so as to obtain a first coated material;
S300: mixing the first coated material and a lithium salt, and performing a first calcination, so as to obtain a first calcined material; and
S400: mixing the first calcined material, a carbon source and a nitrogen source, and performing a second calcination, so as to obtain the coated cathode material,
wherein the coated cathode material includes a cathode material matrix, a coprecipitation layer located on a surface of the cathode material matrix, and a passivation layer located on a surface of the coprecipitation layer,
wherein the matrix includes a doped layer contiguous with the coprecipitation layer; and the doped layer has a thickness less than or equal to 50nm; and
composition of the coprecipitation layer includes transition metal phosphate and transition metal oxide.

In some embodiments, the precursor in step S100 is ternary metal hydroxide (e.g., nickel cobalt manganese hydroxide), and in step S200, anions (including phosphate radicals and hydroxy radicals) in the base solution and the metal cations (including metal M1, M2, N1, and N2 cations) in the transition metal salt solution are subjected to a precipitation reaction, and a coating layer is formed on the surface of the precursor, and composition of the coating layer includes a coprecipitation of phosphate and hydroxide; in step S300, the ternary metal hydroxide is converted into lithium nickel cobalt manganate oxide by calcination in the presence of the lithium salt, the hydroxide in the coating layer is converted into corresponding oxide, and part of the composition of the coating layer permeates into the core to form the doped layer; in step S300, the carbon source and the nitrogen source are added for calcination to form a passivation layer as coating shell.

In some embodiments, the precursor is ternary metal hydroxide, further a compound NiₓCo_{y}Mn_{1-x-y}(OH)₂, where 0<x<1, and 0<y<1.

The precursor may be prepared according to a conventional method well known to those skilled in the art.

Exemplarily, the precursor can be prepared as follows: dissolving a nickel salt, a cobalt salt, and a manganese salt in deionized water, mixing it evenly to form a base solution, then introducing an alkali solution into the base solution by a peristaltic pump under protection of a nitrogen atmosphere and stirring for precipitation, controlling pH of the base solution to be 10.0-12.0 (such as 10, 10.2, 10.5, 10.8, 11, 11.2, 11.5, 11.8, 12, or the like) through ammonia water, and washing with deionized water after precipitation is finished.

Optionally, a total molar concentration of the metal salts in the base solution is 0.1mol/L to 10mol/L. By way of example, the total molar concentration may be 0.1mol/L, 1mol/L, 2mol/L, 3mol/L, 4mol/L, 6mol/L, 8mol/L, 10mol/L, etc.

Optionally, a concentration of the alkali solution is 0.1mol/L to 10mol/L. By way of example, the concentration may be 0.1mol/L, 1mol/L, 2mol/L, 3mol/L, 4mol/L, 6mol/L, 8mol/L, 10mol/L, etc.

Optionally, a reaction temperature of the precipitation is 20°C to 100°C. By way of example, the reaction temperature may be 20°C, 30°C, 40°C, 50°C, 60°C, 70°C, 80°C, 90°C, 95°C, 100°C, or the like. Further, a reaction duration is 0.5h to 30h. By way of example, the reaction time may be 0.5h, 1h, 2h, 3h, 5h, 10h, 15h, 20h, 25h, 30h, etc.

In some embodiments, a particle size of the precursor is 4µm to 15µm, and further may be 4µm, 5µm, 6µm, 7µm, 8µm, 9µm, 10µm, 11µm, 12µm, 13µm, 14µm, 15µm, or the like.

In some embodiments, the precursor, the phosphate, and the water are mixed, and the pH is adjusted to 4-7 (such as 4, 4.5, 5, 5.5, 6, 6.5, 7, or the like) with an acid solution, so as to obtain the base solution. Further, the acid solution may be selected from an acetic acid solution, and still further, a concentration of acetic acid may be 0.1mol/L, 0.2mol/L, 0.5mol/L, 1mol/L, 2mol/L, 3mol/L, 5mol/L, or the like.

In some embodiments, the phosphate is soluble phosphate, and further, the soluble phosphate is selected from one or more of ammonium dihydrogen phosphate, diammonium hydrogen phosphate, sodium dihydrogen phosphate, potassium dihydrogen phosphate, or the like.

In some embodiments, a concentration of the phosphate radicals in the base solution is 0.005mol/L to 0.5mol/L, and specifically may be 0.005mol/L, 0.008mol/L, 0.01mol/L, 0.015mol/L, 0.02mol/L, 0.025mol/L, 0.03mol/L, 0.04mol/L, 0.05mol/L, 0.06mol/L, 0.07mol/L, 0.08mol/L, 0.09mol/L, 0.1mol/L, 0.2mol/L, 0.3mol/L, 0.4mol/L, 0.5mol/L, or the like.

In some embodiments, a mass ratio of the precursor and the phosphate is 1:(0.001 -0.1), such as 1:0.001, 1:0.005, 1:0.01, 1:0.02, 1:0.03, 1:0.04, 1:0.05, 1:0.06, 1:0.07, 1:0.08, 1:0.09, 1:0.1, or the like.

In some embodiments of the present disclosure, in step S200, the transition metal salt solution is added into the base solution, wherein the metal cation in the transition metal salt solution and the at least two anions in the base solution being subjected to the precipitation reaction to form the coprecipitation, which is coated on the precursor, so as to obtain the first coated material.

Further, the transition metal salt solution includes metal M1, M2, N1, and N2, where M1, M2, N1, and N2 are as defined in the first aspect of the present disclosure. Still further, a total molar concentration of M1 and N1 is 0.001mol/L to 0.1mol/L, such as 0.001mol/L, 0.005mol/L, 0.01mol/L, 0.02mol/L, 0.04mol/L, 0.06mol/L, 0.08mol/L, 0.1mol/L, etc., and a total molar concentration of M2 and N2 is 0.001mol/L to 0.1mol/L, such as 0.001mol/L, 0.005mol/L, 0.01mol/L, 0.02mol/L, 0.04mol/L, 0.06mol/L, 0.08mol/L, 0.1mol/L, etc.

In some embodiments, the transition metal salt solution includes a first metal salt and a second metal salt; the first metal salt includes metal M1 and N1; the second metal salt includes metal M2 and N2.

In some embodiments, a mass ratio of the precursor, the first metal salt, and the second metal salt is 1:(0.001-0.05):(0.001-0.05), such as 1:0.001:0.001, 1:0.005:0.001, 1:0.05:0.001, 1:0.001:0.005, 1:0.001:0.01, 1:0.001:0.05, etc.

In some embodiments, step S200 may include the following substeps:
S210: dissolving the first metal salt in a solvent to obtain a first metal salt solution; and adding the first metal salt solution into the base solution, wherein the metal cations in the first metal salt solution reacts with phosphate radicals in the base solution to obtain a first precipitate;
S220: dissolving the second metal salt in a solvent to obtain a second metal salt solution; adjusting pH to 8-12 (such as 8, 8.5, 9, 9.5, 10, 10.5, 11, 11.5, 12, etc.) with an alkali solution, and adding the second metal salt solution, wherein the metal cations in the second metal salt solution reacts with hydroxy radicals in the base solution to obtain a second precipitate; and
S230: forming the coprecipitation by the first precipitate and the second precipitate, and coating it on the precursor in situ to obtain the first coated material.

In some embodiments, in step S210, a speed of adding the first metal salt solution into the base solution is 0.4mL/min to 0.6mL/min.

Further, the addition may be performed in a manner well known to those skilled in the art, such as a constant speed peristaltic pump, so as to effectively control a speed of introduction of the metal element into the base solution, and ensure that a thickness of the coating layer (phosphate coating layer) is appropriate.

By way of example, the addition speed may be 0.4mL/min, 0.45mL/min, 0.5mL/min, 0.55mL/min, 0.6mL/min, or the like.

In some embodiments, a concentration of the metal cations in the first metal salt solution is 0.001mol/L to 0.1mol/L, and further, specifically, the total molar concentration of M1 and N1 is 0.001mol/L to 0.1mol/L.

In some embodiments, a concentration of the metal cations in the second metal salt solution is 0.001mol/L to 0.1mol/L, and further, specifically, the total molar concentration of M2 and N2 is 0.001mol/L to 0.1mol/L.

Further, a total concentration of the metal cations in the first metal salt solution and the second metal salt solution is 0.001mol/L to 0.02mol/L.

In some embodiments, a mass ratio of the precursor and the alkali solution is 1:(1-50), and further, a concentration of the alkali solution is 0.1mol/L to 10mol/L. In some embodiments, the alkaline solution is ammonia water, and further, a concentration of the ammonia water may be 0.1mol/L, 0.2mol/L, 0.5mol/L, 1mol/L, 2mol/L, 3mol/L, 5mol/L, or the like.

In some embodiments, in step S220, a speed of adding the second metal salt solution is 0.4mL/min to 0.6mL/min.

Further, the addition may be performed in a manner well known to those skilled in the art, such as a constant speed peristaltic pump, so as to effectively control a speed of introduction of the metal element into the base solution, and ensure that a thickness of the coating layer (oxide coating layer) is appropriate.

By way of example, the addition speed may be 0.4mL/min, 0.45mL/min, 0.5mL/min, 0.55mL/min, 0.6mL/min, or the like, and other point values within the above numerical range may be selected, which is not repeated herein.

In the present disclosure, the transition metal salt solution (the first metal salt solution and the second metal salt solution) may be prepared according to a conventional method well known to those skilled in the art, and the soluble salt containing the metal element may be dissolved in water.

By way of example, the M1 salt and the N1 salt may be sequentially added to an aqueous solution, and after complete dissolution, let it stand for 12h to 20h (such as 12h, 13h, 14h, 15h, 16h, 17h, 18h, 19h, 20h, or the like), so as to ensure that the metal elements are uniformly dispersed in the aqueous solution.

In the present disclosure, the first coated material prepared in step S200 is further dried before the first calcination in step S300, and the drying may be performed in a manner well known to those skilled in the art, and preferably performed in a rotary evaporator at 80°C for 5h.

In some embodiments, the lithium salt is one or more of lithium carbonate, lithium hydroxide, lithium acetate, or the like. Further, in the first calcination, a ratio between the mole number of the lithium element in the lithium salt and the total mole number of transition metal in the precursor, i.e., Li/ME, is set. In some embodiments, Li/ME is 1:(1.0-1.1) (such as 1:1.01, 1:1.02, 1:1.03, 1:1.04, 1:1.05, 1:1.06, 1:1.07, 1:1.08, 1:1.09, etc.). In some embodiments, the lithium salt is added in a quantity of 0.01wt% to 50wt% of a material of the core.

In some embodiments of the present disclosure, a temperature of the first calcination is 500°C to 1,000°C (such as 500°C, 600°C, 700°C, 800°C, 900°C, 1,000°C, etc.), and further, duration of the first calcination is 5h to 30h (such as 5h, 10h, 15h, 20h, 25h, 30h, etc.), and still further, an atmosphere of the first calcination is air or oxygen.

In some embodiments, conditions of the first calcination include: calcinating at 500°C to 1,000°C in an oxygen or air atmosphere.

In some embodiments of the present disclosure, a temperature of the second calcination is 200°C to 800°C, by way of example, the calcination temperature may be 200°C, 300°C, 400°C, 500°C, 600°C, 700°C, 800°C, or the like. Further, duration of the second calcination is 5h to 30h, by way of example, the calcination duration may be 5h, 10h, 15h, 20h, 25h, 30h, or the like. Still further, an atmosphere of the second calcination is an inert atmosphere, such as N₂, Ar, or the like.

In some embodiments, conditions of the second calcination include: calcinating at 200°C to 800°C in a protective gas atmosphere.

In some embodiments, in an XRD pattern of the coated cathode material prepared using the preparation method according to the present disclosure, a diffraction peak intensity ratio I₀₀₃/I₁₀₄ between a (003) crystal plane and a (104) crystal plane satisfies 1.40< I₀₀₃/I₁₀₄≤1.60.

In some embodiments, a lattice parameter c of the coated cathode material prepared using the preparation method according to the present disclosure satisfies a relationship of: 14Å<c<15Å.

A third aspect of the present disclosure provides a battery cathode, wherein an active material of the battery cathode is the coated cathode material according to the first aspect of the present disclosure or the coated cathode material prepared by the preparation method according to the second aspect of the present disclosure.

In some embodiments, the doped layer of the coated cathode material includes the phosphate and the oxide, wherein the phosphate and the oxide in the doped layer form the olivine micro-region in the shallow surface layer of the core to form the framework support, so as to inhibit generation and growth of the cracks of the crystal boundary caused by the shrinkage of the unit cell after lithium extraction, and the oxide can also inhibit the lattice distortion generated by the migration of the metal ions and the oxygen ions in the cycle process, and inhibit the formation of the surface impure phases, such as the rock salt phase and the spinel phase; conductivity of lithium ions of the nitride passivation layer is far higher than that generated when coating is performed by conventional inorganic oxide close to an insulation state, thus improving the cycle performance and the rate performance of the material; when the material is used as the cathode material of a lithium ion battery, on the one hand, the electrode/electrolyte solution interface can be effectively stabilized, corrosion and structural damage of the material interface are reduced, DCR growth is reduced, and the cycle performance and the rate performance of the material are improved; on the other hand, the passivation layer is of a porous structure, having a good compatibility with the electrolyte solution, so that wettability of the electrode is increased, and integrity can be kept in an electrode rolling process.

A fourth aspect of the present disclosure provides a secondary battery, including the battery cathode according to the third aspect of the present disclosure.

By way of example, the secondary battery may be a lithium ion battery, a lithium-sulfur battery, or a lithium-air battery, and further, the secondary battery is a lithium ion battery. Optionally, the secondary battery includes an electrolyte solution, a positive plate, a negative plate, and a separator, wherein the positive plate includes a cathode active material with lithium ions inserted or extracted, a conductive agent, a current collector, and a binder for binding the cathode active material and the conductive agent with the current collector; the negative plate includes a negative electrode active material with lithium ions inserted or extracted, a conductive agent, a current collector, and a binder for binding the negative electrode active material and the conductive agent with the current collector. Preferably, the cathode active material is the coated cathode material according to the first aspect of the present disclosure or the coated cathode material prepared by the preparation method according to the second aspect of the present disclosure.

A fifth aspect of the present disclosure provides an electric device, including the secondary battery according to the fourth aspect of the present disclosure. The secondary battery may be used as a power source or an energy storage unit of the electric device.

By way of example, the electric device may include, but is not limited to, a mobile apparatus (for example, a mobile phone, a notebook computer, or the like), an electric vehicle (for example, a battery electric vehicle, a hybrid electric vehicle, a plug-in hybrid electric vehicle, an electric bicycle, an electric scooter, an electric golf cart, an electric truck, or the like), an electric train, a ship, a satellite, an energy storage system, or the like.

By way of example, the electric device may be a mobile phone, a tablet computer, a notebook computer, or the like. Generally, the device is required to be thin and light, and the secondary battery may be used as the power source thereof.

Some specific examples are described below.

For experimental parameters not described in the following specific examples, reference is preferably made to the guideline given in the present disclosure, or may be made to experimental manuals in the art or other experimental methods known in the art, or to experimental conditions recommended by manufacturers.

Raw materials and reagents mentioned in the following specific examples are commercially available or can be prepared by those skilled in the art according to known means.

### 1. Preparation of cathode material

### Example 1

A cathode material S1 was prepared by the following preparation steps:
(1) adding 50g of precursor (Ni_{0.6}Co_{0.1}Mn_{0.3}(OH)₂, with a particle size of 4µm) and 1g of phosphate (ammonium dihydrogen phosphate) into water (200mL), adjusting pH to 6.5 with acetic acid, stirring for 1h to mixing, and standing for 12h to obtain a base solution;
(2) providing a first metal salt solution as follows: dissolving 0.1151g of aluminum chloride and 0.2784g of germanium chloride into 20mL of deionized water, stirring for 1h for dissolution, and standing for 12h;
   providing a second metal salt solution as follows: dissolving 0.1001g of aluminum chloride and 0.1580g of germanium chloride into 20mL of deionized water, stirring the mixture for 1h for dissolution, and standing for 12h;
   introducing the first metal salt solution into the base solution at 0.5mL/min, carrying out in-situ coating (first coating) to obtain a first coated material, adjusting pH to 8.5 with ammonia water, and then continuously introducing the second metal salt solution at 0.5mL/min (second coating), so as to obtain a second coated material (solid);
(3) drying the obtained solid (80°C, 8h), adding a lithium salt for mixing (lithium carbonate was mixed, Li/ME=1.05), and calcining at 940°C for 15h in an oxygen atmosphere (primary sintering), so as to obtain a first calcined material; and
(4) mixing 20g of first calcined material and 0.2g of urea, and calcining at 480°C for 12h in an Ar gas atmosphere.

### Example 2

A cathode material S2 was prepared by substantially the same preparation method as in example 1, except that:
in step (2): the first metal salt solution was provided as follows: dissolving 0.1151g of aluminum chloride and 0.2784g of gallium acetate into 20mL of deionized water, stirring for 1h for dissolution, and standing for 12h; and
the second metal salt solution was provided as follows: dissolving 0.1001g of aluminum sulfate and 0.1580g of gallium chloride into 20mL of deionized water, stirring for 1h for dissolution, and standing for 12h.

### Example 3

A cathode material S3 was prepared by substantially the same preparation method as in example 1, except that:
in step (2): the first metal salt solution was provided as follows: dissolving 0.1151g of aluminum nitrate and 0.2784g of cerium chloride into 20mL of deionized water, stirring for 1h for dissolution, and standing for 12h; and
the second metal salt solution was provided as follows: dissolving 0.1001g of aluminum nitrate and 0.1580g of cerium chloride into 20mL of deionized water, stirring for 1h for dissolution, and standing for 12h.

### Comparative example 1

A cathode material D1 was prepared by the following preparation steps:
providing a precursor (Ni_{0.6}Co_{0.1}Mn_{0.3}(OH)₂, with a particle size of 4µm); mixing the precursor and lithium hydroxide according to a molar ratio of Li/(Ni+Mn+Co) of 1.04, and calcining at 940°C for 15h in an oxygen atmosphere to obtain a first calcined material; and calcining the first calcined material at 450°C for 15h in an Ar gas atmosphere.

### Comparative example 2

A cathode material D2 was prepared by the following preparation steps:
(1) mixing a precursor (Ni_{0.6}Co_{0.1}Mn_{0.3}(OH)₂, with a particle size of 4µm) and lithium hydroxide according to a molar ratio of Li/(Ni+Mn+Co) of 1.04, and calcining at 940°C for 15h in an oxygen atmosphere, so as to obtain a first calcined material; and
(2) mixing 2.5kg of first calcined materials and 8g of nanometer aluminum oxide, and calcining at 450°C for 15h in an air atmosphere.

### Comparative example 3

A cathode material D3 was prepared by the following preparation steps:
(1) mixing a precursor (Ni_{0.6}Co_{0.1}Mn_{0.3}(OH)₂, with a particle size of 4µm) and lithium carbonate according to a molar ratio of Li/(Ni+Mn+Co) of 1.04, and calcining at 930°C for 15h in an oxygen atmosphere, so as to obtain a first calcined material; and
(2) mixing 2.5kg of first calcined materials and 10g of nanometer gallium oxide, and calcining at 450°C for 15h in an air atmosphere.

### Comparative example 4

A cathode material D4 was prepared by the following preparation steps:
(1) mixing a precursor (Ni_{0.6}Co_{0.1}Mn_{0.3}(OH)₂, with a particle size of 4µm) and lithium carbonate according to a molar ratio of Li/(Ni+Mn+Co) of 1.04, and calcining at 930°C for 15h in an oxygen atmosphere, so as to obtain a first calcined material; and
(2) mixing 2.5kg of first calcined materials, 10g of nanometer germanium oxide, and 12g of aluminum oxide, and calcining at 450°C for 15h in an air atmosphere.

### 2. Scanning electron microscope (SEM) observation and results

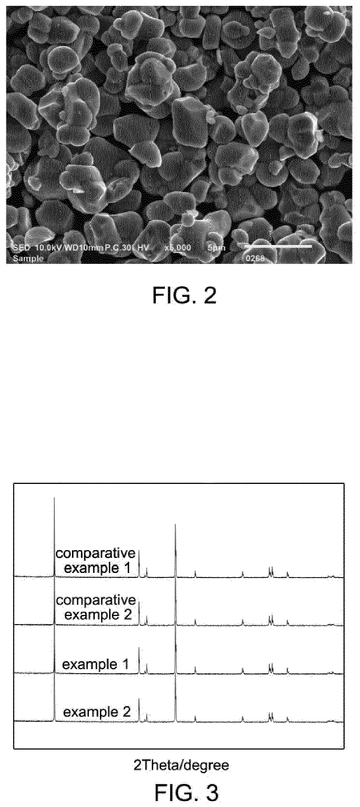

Morphology of the cathode material obtained in example 1 was characterized by a scanning electron microscope, the result was shown in FIG. 2, and it could be seen that there was an obvious coating layer structure on the surface of the material, and an overall coating effect of C₃N₄ was good.

### 3. Performance test of the cathode material

Each of the cathode materials prepared in example 1, example 2, comparative example 1, and comparative example 2 of the present disclosure was subjected to a performance test.

Test parameters were a voltage of 2.8 V to 4.4V and a rate of 0.5C/1C.

A test mode was as follows: the cathode materials obtained in example 1, example 2, comparative example 1, and comparative example 2 were measured by using an X-ray diffraction instrument (Bruker D8, scanning range: 10-80°, scanning speed: 2°/min), so as to obtain X-ray diffraction patterns (XRD patterns) after different cycles.

FIG. 3 was an XRD comparative diagram after 50 cycles, and it could be seen from FIG. 3 that no impurity peak appeared after the samples prepared according to the methods of examples 1 to 2 and comparative examples 1 to 2 were cycled 50 times, which indicated that the crystal structure of the material was not changed after doping of the phosphate and oxide of Al and Ge and coating of C₃N₄, and meanwhile, the structure of the material had better stability and no structural variation appeared.

Table 1 showed XRD refinement results of the materials prepared in examples 1 to 2 and comparative examples 1 to 4.

As could be seen from table 1, the I₀₀₃/I₁₀₄ values of the doped materials (example 1 and example 2) were 1.562/1.568 which were obviously higher than that of the unmodified sample (comparative example 1, where the I₀₀₃/I₁₀₄ value was 1.405) or the sample modified by the traditional method (comparative example 2, where the I₀₀₃/I₁₀₄ value was 1.457), a Li/Ni hybrid arrangement of the sample with the surface doped with the phosphate and oxide was reduced, and Al and Ge were doped to form a strong framework effect by filling metal vacancies in the lattices, thus inhibiting the formation of the NiO rock salt phase, and then inhibiting the Li/Ni hybrid arrangement.

According to table 1, it could also be found that, after 50 cycles under the voltage of 2.8V to 4.4V and the rate of 0.5C/1C, the I₀₀₃/I₁₀₄ value of example 1 was larger than that of comparative examples 1 to 4, the unit cell parameters c, a, and c/a and the unit cell volume value were all increased, and meanwhile, the unit cell volume was increased, such that the diffusion of Li⁺ in the bulk phase was facilitated, and the cycle DCR could be reduced, which was based on the fact that Al and Ge replaced transition metal vacancies, and the bond energy was higher than that of Ni/Co/Mn and O elements, which was beneficial to enhance the stability of the layered structure, and the generation of the rock salt phase was inhibited; on the other hand, the electrode/electrolyte solution interface could be stabilized after coating, the reaction of Ni⁴⁺ and the electrolyte solution was inhibited, the corrosion of the cathode material by HF in the electrolyte solution was relieved, and the formation of oxygen vacancies was inhibited.

**Table 1. XRD refinement data of samples in examples 1 to 2 and comparative examples 1 to 4**

| Category | I₀₀₃/I₁₀₄ | c/Å | a/Å | c/a | V/Å³ |
|---|---|---|---|---|---|
| Comparative example 1 | 1.405 | 14.241 | 2.872 | 4.956 | 102.13 |
| Comparative example 2 | 1.457 | 14.249 | 2.873 | 4.960 | 102.46 |
| Comparative example 3 | 1.487 | 14.243 | 2.874 | 4.958 | 102.45 |
| Comparative example 4 | 1.502 | 14.247 | 2.874 | 4.957 | 102.47 |
| Example 1 | 1.562 | 14.289 | 2.875 | 4.970 | 102.98 |
| Example 2 | 1.568 | 14.288 | 2.873 | 4.973 | 102.99 |

### 4. Performance test of battery fabricated from cathode material

The cathode materials prepared in the examples and the comparative examples were subjected to cycle and rate test at 25°C and 45°C, and a test method was as follows:
assembling the cathode materials into a button battery, with the electrode material: conductive carbon black=90:10(wt%), the solvent being NMP, and the surface density of a battery electrode plate being 1.8mg/cm²; and the button battery was charged and discharged for 1 cycle at a rate of 0.1C/0.1C under a voltage of 2.8V to 4.4V at 25°C, then charged and discharged at rates of 0.5C/0.1C, 0.5C/0.2C, 0.5C/0.5C, and 0.5C/1C, and then subjected to a cycle performance test (50 cycles) at a rate of 0.5C/1C at 25°C and 45°C, and the test results were shown in the following table 2:

**Table 2**

| Category | 0.1C charge capacity (mAh/g) | 0.1C discharge capacity (mAh/g) | Retention rate after 50 cycles 25°C (%) | Retention rate after 50 cycles 45°C (%) | 0.2C discharge capacity (mAh/g) | 0.5C discharge capacity (mAh/g) | 1C discharge capacity (mAh/g) |
|---|---|---|---|---|---|---|---|
| Comparative example 1 | 204.5 | 188.4 | 85.25 | 89.40 | 183.2 | 175.9 | 172.3 |
| Comparative example 2 | 205.3 | 189.3 | 87.56 | 91.78 | 183.8 | 175.5 | 174.2 |
| Comparative example 3 | 205.9 | 189.7 | 87.65 | 92.16 | 184.3 | 176.9 | 173.8 |
| Comparative example 4 | 206.8 | 189.6 | 89.03 | 92.25 | 184.2 | 178.8 | 174.2 |
| Example 1 | 209.3 | 192.5 | 93.84 | 96.67 | 188.3 | 183.2 | 178.3 |
| Example 2 | 209.5 | 192.4 | 93.90 | 96.54 | 187.9 | 183.4 | 178.3 |
| Example 3 | 209.2 | 192.5 | 93.12 | 96.49 | 188.5 | 183.5 | 178.6 |

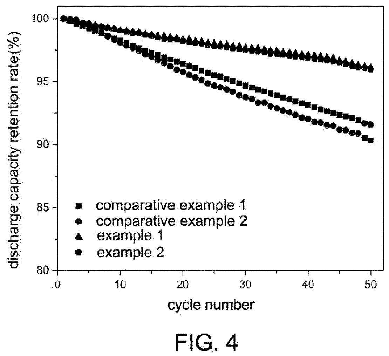

As could be seen from the data in the above table, by comparing the examples with the comparative examples, the electrochemical performance of the material was improved after doping of the phosphate and oxide and coating of C₃N₄. For the cathode material (coated cathode material) according to the present disclosure, the charge-discharge capacity was improved by about 2-5mAh/g compared with the comparative examples, the rate performance was also obviously improved, and the cycle performance and the rate performance of the coating-modified cathode material at 45°C were obviously improved (as shown in table 2 and FIG. 4), which indicated that for the coated cathode material prepared by the preparation method according to the examples of the present disclosure, the coating layer of the core-shell structure formed could form an effective and stable interface layer, such that the electrode/electrolyte solution interface reaction was reduced, and meanwhile, the coating layer had high lithium ion conductivity and a lithium ion storage function, thus obviously improving the initial discharge capacity and the rate performance of the material.

In conclusion, the coated cathode material prepared according to the present disclosure is used as the cathode material of the lithium ion battery, and the phosphate/hydroxide coprecipitation of the core-shell structure grown in situ on the surface of the precursor realizes shallow surface doping of the phosphate and oxide after sintering, thus inhibiting the crystal cracks caused by the unit cell shrinkage in the cycle process, and preventing the lattice distortion caused by the formation of the impure phases, such as the rock salt phase and the spinel phase, in the surface sub-layer; further, nitride coating inhibits the electrode/electrolyte solution interface contact, reduces the lattice defects caused by the dissolving-out phenomenon of the transition metal, reduces the increase of the cycle DCR, and improves the high-temperature storage and cycle performance of the material.

All documents mentioned in the present disclosure are incorporated by reference in the present disclosure as if each document was individually incorporated by reference. The cited documents referred to in the present disclosure are incorporated by reference in their entirety for all purposes unless conflicting with an application object and/or technical solution of the present disclosure. When the cited document is referred to in the present disclosure, the definitions of relevant technical features, terms, nouns, phrases, or the like, in the cited document are also incorporated by reference. When the cited document is referred to in the present disclosure, the cited examples and preferred embodiments of the related technical feature are also incorporated into the present disclosure by reference, but to the extent that the present disclosure can be implemented. It should be understood that when a reference conflicts with a description in the present disclosure, the present disclosure prevails or modification is adaptively performed in light of the description of the present disclosure.

The technical features of the above embodiments and examples can be combined in any proper manner, all possible combinations of the technical features of the embodiments and examples described above may not be described for the sake of brevity, but should be considered to be within the scope of the specification as long as there is no contradiction between the combinations of the technical features.

The above-mentioned examples only express several embodiments of the present disclosure, but not to be construed as limiting the scope of the application. It should be noted that various changes and improvements can be made by those skilled in the art without departing from the concept of the disclosure, and these changes and improvements are all within the protection scope of the present disclosure. Furthermore, it should be understood that various changes or modifications can be made to the disclosure by those skilled in the art after reading the teaching of the disclosure, and obtained equivalents also fall within the protection scope of the present disclosure. It should also be understood that technical solutions obtained by those skilled in the art through logical analysis, reasoning or limited experiments based on the technical solutions provided by the present disclosure are within the protection scope of the claims appended to the present disclosure. Therefore, the protection scope of the present disclosure should be subject to the appended claims, and the description and drawings can be used to explain the contents of the claims.

## Claims

1. A coated cathode material, **characterized by** comprising a cathode material matrix, a coprecipitation layer located on a surface of the cathode material matrix, and a passivation layer located on a surface of the coprecipitation layer,
wherein the matrix comprises a doped layer contiguous with the coprecipitation layer, and the doped layer has a thickness less than or equal to 50nm; and
composition of the coprecipitation layer comprises transition metal phosphate and transition metal oxide.

2. The coated cathode material according to claim 1, wherein composition of the doped layer comprises the transition metal phosphate and the transition metal oxide.

3. The coated cathode material according to claim 2, wherein the doped layer has a micro-support structure.

4. The coated cathode material according to claim 1, wherein the passivation layer has a porous structure.

5. The coated cathode material according to any one of claims 1 to 4, wherein a molecular formula of the transition metal phosphate is M1ₐN1_{b}(PO₄)₃, wherein M1 and N1 are different and independently selected from Ni, Co, Mn, Zr, Bi, Zn, La, Al, Ti, Ge, W, or Sr, 0≤a<10, 0≤b<10, and a and b are not both 0; and
a molecular formula of the transition metal oxide is M2_{c}N2_{d}O₂, wherein M2 and N2 are different and independently selected from Ni, Co, Mn, Zr, Bi, Zn, La, Al, Ti, Ge, W or Sr, 0≤c<10, 0≤d<10, and c and d are not both 0.

6. The coated cathode material according to claim 5, **characterized by** comprising one or more of the following features:
(1) M1 and N1 are different and independently selected from Al, Ge, W, Sr, Zr, or Ti;
(2) M2 and N2 are different and independently selected from Al, Ge, W, Sr, Zr, or Ti; and
(3) 0≤a<3, 0≤b<4, 0≤c<3, and 0≤d<4.

7. The coated cathode material according to any one of claims 1 to 4, wherein a material of the passivation layer is a compound CₘNₙ, wherein 0<m<5, 0<n<5, and m and n are integers.

8. The coated cathode material according to any one of claims 1 to 4, **characterized by** further comprising at least one of the following features:
(1) in an XRD pattern of the coated cathode material, a diffraction peak intensity ratio I₀₀₃/I₁₀₄ between a (003) crystal plane and a (104) crystal plane satisfies 1.40<I₀₀₃/I₁₀₄≤1.60; and
(2) a lattice parameter c of the coated cathode material satisfies a relationship of: 14Å<c<15Å.

9. A preparation method of a coated cathode material, **characterized by** comprising steps of:
S100: mixing a precursor, phosphate, and water, and adjusting pH to 4-7, so as to obtain a base solution;
S200: adding a transition metal salt solution into the base solution, wherein a metal cation in the transition metal salt solution and at least two anions in the base solution undergo a precipitation reaction to form a coprecipitation coated on the precursor, so as to obtain a first coated material;
S300: mixing the first coated material and a lithium salt, and performing a first calcination, so as to obtain a first calcined material; and
S400: mixing the first calcined material, a carbon source, and a nitrogen source, and performing a second calcination, so as to obtain the coated cathode material,
wherein the coated cathode material comprises a cathode material matrix, a coprecipitation layer located on a surface of the cathode material matrix, and a passivation layer located on a surface of the coprecipitation layer,
wherein the matrix comprises a doped layer contiguous with the coprecipitation layer, and the doped layer has a thickness less than or equal to 50nm; and
composition of the coprecipitation layer comprises transition metal phosphate and transition metal oxide.

10. The preparation method according to claim 9, wherein in the step S300, part of constituent elements of the coprecipitation of the first coated material permeate from a surface to a core, so as to obtain the first calcined material.

11. The preparation method according to claim 9 or 10, **characterized by** further comprising one or more of the following features:
(1) a particle size of the precursor is 4µm to 15µm;
(2) conditions of the first calcination comprise: performing calcination at 500°C to 1,000°C in an oxygen or air atmosphere;
(3) conditions of the second calcination comprise: performing calcination at 200°C to 800°C in a protective gas atmosphere; and
(4) a speed of adding the metal salt solution into the base solution is 0.4mL/min to 0.6mL/min.

12. The preparation method according to claim 9 or 10, wherein the transition metal salt solution comprises a first metal salt and a second metal salt; the first metal salt comprises metal M1 and N1; and the second metal salt comprises metal M2 and N2, where M1, M2, N1, and N2 are as defined in claim 5 or 6;
the step S200 comprises: dissolving the first metal salt in a solvent to obtain a first metal salt solution; and adding the first metal salt solution into the base solution, wherein the metal cations in the first metal salt solution reacts with phosphate radicals in the base solution, so as to obtain a first precipitate; and
dissolving the second metal salt in a solvent to obtain a second metal salt solution; adjusting pH to 8-12 with an alkali solution, and adding the second metal salt solution into the base solution, wherein the metal cations in the second metal salt solution reacts with hydroxy radicals in the base solution, so as to obtain a second precipitate; and
forming the coprecipitation by the first precipitate and the second precipitate, and coating it in situ on the precursor, so as to obtain the first coated material.

13. The preparation method according to claim 12, **characterized by** further comprising one or more of the following features:
(1) a mass ratio of the precursor, the first metal salt, and the second metal salt is 1:(0.001-0.05):(0.001-0.05);
(2) a concentration of the metal cations in the first metal salt solution is 0.001 mol/L to 0.1 mol/L, a concentration of the metal cations in the second metal salt solution is 0.001mol/L to 0.1mol/L, and a total concentration of the metal cations in the first metal salt solution and the second metal salt solution is 0.001mol/L to 0.02mol/L;
(3) a concentration of the phosphate radicals in the base solution is 0.005mol/L to 0.5mol/L; and
(4) a mass ratio of the precursor and the alkali solution is 1:(1-50), and a concentration of the alkali solution is 0.1mol/L to 10mol/L.

14. The preparation method according to claim 9 or 10, wherein in the step S400,
the first calcined material, the carbon source, and the nitrogen source are mixed to be subjected to the second calcination, and a porous passivation layer is formed on the first coated material, so as to obtain the coated cathode material.

15. The preparation method according to claim 14, wherein a mass ratio of the first coated material, the carbon source, and the nitrogen source is 1 :(0.001 - 0.01):(0.0013-0.02).

16. The preparation method according to claim 9 or 10, **characterized by** further comprising one or more of the following features:
(1) the phosphate is one or more of ammonium dihydrogen phosphate, diammonium hydrogen phosphate, sodium dihydrogen phosphate, and potassium dihydrogen phosphate;
(2) the lithium salt is one or more of lithium carbonate, lithium hydroxide, and lithium acetate; and
(3) the carbon source and the nitrogen source are each independently one or more of urea, uric acid, and hydrazine hydrate.

17. A battery cathode, **characterized in that** an active material of the battery cathode is the coated cathode material according to any one of claims 1 to 9 or the coated cathode material prepared by the preparation method according to any one of claims 10 to 16.

18. A secondary battery, **characterized by** comprising the battery cathode according to claim 17.

19. An electric device, **characterized by** comprising the secondary battery according to claim 18.
